# EUROPEAN PATENT APPLICATION

(11) **EP 3 879 673 A1**
(43) Date of publication of application: **15.09.2021**
(21) Application number: 20162372.5
(22) Date of filing: 11.03.2020
(51) Int. Cl.: H02K 1/02, H02K 15/02, H02K 1/16

(54) **LAMINATED CORE SEGMENT FOR STATOR OR ROTOR OF A GENERATOR FOR A WIND TURBINE**

(71) Applicant: Siemens Gamesa Renewable Energy A/S, 7330 Brande (DK)
(72) Inventor: Skougaard, Anders Vorm, 7400 Herning (DK)
(74) Representative: Aspacher, Karl-Georg

(57) **Abstract**

A manufacturing method of a laminated segment (100) for a stator or rotor in a wind turbine generator including following steps:

- Step A of providing a sheet of raw material (200),

- Step B of cutting the raw material sheet into a plurality of semi-finished sheet segments (210), wherein each semi-finished sheet segment comprises a yoke (211) extending along a rectilinear direction, a plurality of semi-finished teeth (212) extending from the yoke (211) and a plurality of semi-finished slots (213) interposed between zwo adjacent teeth (212),

- Step C of curving each semi-finished sheet segment (210) in its longitudinal direction to obtain the finished sheet segment (110) and

- Step D of stacking the plurality of finished sheet segments (110) on top of each other to obtain the laminated segment (100).

Steps C and D may be inverted.

## Description

### Field of invention

The present invention relates to a manufacturing method for a circumferential segment of a stator or a rotor of an electrical machine. The present invention further relates to a circumferential segment of a stator or a rotor of an electrical machine. Each segment comprises a plurality of lamination sheets, which are stacked on one another along a longitudinal direction.

### Art Background

In electrical machines, segmentation of the stator and/or the rotor structure may be required to ease manufacturing and transportation. Each stator or rotor segment may be configured to cover for example an arc of 30, 60, 90, 120 degrees (or any other angle) along the circumferential direction of the segment. The segments are circumferentially joined to form the stator or rotor (for example a stator or rotor may comprise six stator segments, each covering an arc of 60 degrees). In a stator or rotor of such a type a winding may be provided.

Each circumferential segment of the above type comprises a frame body longitudinally extending along a longitudinal axis and including a segment yoke and a plurality of teeth protruding according to a radial direction from the segment yoke to respective tooth radial ends. In the segment a plurality of slots is also defined, each slot being delimited circumferentially by two adjacent teeth and being radially extended between the segment yoke and the respective tooth radial ends. Each slot is subject to house a respective winding. Each segment may comprise a plurality of lamination sheets which are stacked and attached one after another along a longitudinal direction that is coincident or parallel to the rotational axis of the electrical machine. Before the stacking step, each lamination sheet is shaped of 30, 60, 90, 120 degrees (or any other angle) and comprised a plurality of teeth and slots, which, after the stacking step, constitutes the teeth and slots of the segment. According to known manufacturing processes, each lamination sheet is directly formed in the curved shape including teeth and slots, by cutting it out from a sheet of raw material. The main inconvenience of such manufacturing processes is that the scrap rate of raw material may reach 60%. This is due to the specific curved shape of the lamination, the circumferential distance between the teeth increasing with the radial distance from the yoke. The costs of the scrap material may be particularly relevant when using "Grain Oriented Electrical Steel" (GOES).

Therefore, there is a need to provide an improved manufacturing method for avoiding the inconveniences above described, with reference to the prior art.

### Summary of the invention

This need may be met by the subject matter according to the independent claims. Advantageous embodiments of the present invention are described by the dependent claims.

According to one embodiment of the invention, it is provided a method of manufacturing a segment for a stator or a rotor an electrical generator. The method includes the following steps:
- providing a sheet of raw material,
- cutting a plurality of semi-finished segment lamination sheet comprising a yoke extending along a rectilinear direction, a plurality of semi-finished teeth extending perpendicularly from the yoke and a plurality of semi-finished slots interposed between the plurality of teeth,

- curving each semi-finished segment lamination sheet about a longitudinal axis orthogonal to the semi-finished segment lamination sheet for obtaining a plurality of finished segment lamination sheet,
- stacking the plurality of finished segment lamination sheet along the longitudinal axis for obtaining the segment.

According to another embodiment of the invention, it is provided a method of manufacturing a segment for a stator or a rotor an electrical generator. The method includes the following steps:
- providing a sheet of raw material,
- cutting a plurality of semi-finished segment lamination sheet comprising a yoke extending along a rectilinear direction, a plurality of semi-finished teeth extending perpendicularly from the yoke and a plurality of semi-finished slots interposed between the plurality of teeth,
- stacking the plurality of semi-finished segment lamination sheet along a longitudinal axis orthogonal to the semi-finished segment lamination sheet for obtaining a semi-finished assembly,
- curving the semi-finished assembly of the previous step about the longitudinal axis for obtaining the segment.

Advantageously, the amount of scrap material is reduced, by first manufacturing straightened-up plurality semi-finished segment lamination sheets, i.e. semi-finished elements having a yoke extending along a rectilinear direction and pluralities of semi-finished teeth and slots extending perpendicularly from the yoke, and then curving them in a subsequent step of the manufacturing process.

According to embodiments of the invention, each semi-finished segment lamination sheet is so dimensioned that the thickness of the semi-finished teeth in a direction parallel to the yoke is smaller than the width of the semi-finished slots in a direction parallel to the yoke, so that in the sheet of raw material the semi-finished teeth of one semi-finished segment lamination sheet can be nested in the semi-finished slots of another semi-finished segment lamination sheet. Advantageously, the nesting of the semi-finished segment lamination sheet in the sheet of raw material allows a further reduction of scrap material, as the material which has to be removed to manufacture the slot opening of one semi-finished segment lamination sheet is used to make the teeth of another semi-finished segment lamination sheet.

According to embodiments of the invention, the step of cutting is performed by punching. Alternatively, the step of cutting may be performed by laser cutting or plasma cutting, punches or ultrasonic cutting or water jet cutting or any other convenient cutting technology.

According to embodiments of the invention, the step of curving is performed in a conical roller machine. To achieve the curved finished segment lamination sheet, the semi-finished segment lamination sheets are rolled in a conical roller machine, with a higher pressure on the yoke top, from which the teeth protrudes, in order to stretch the material.

According to embodiments of the invention, the sheet of raw material comprises Grain Oriented Electrical Steel (GOES). Advantageously, when using a GOES material, the grain orientation can be optimized. By cutting a straight yoke with straight perpendicular teeth to produce the semi-finished segment lamination sheet, the orientation can be conveniently arranged in every tooth. The orientation may be directed parallel to each tooth. Such orientation is maintained after the curving step, i.e. the orientation is radially oriented in the finished segment lamination sheets.

According to another aspect of the invention, it is provided a segment for a stator or a rotor an electrical generator. The segment comprises:
- a plurality of finished segment lamination sheet stacked along a longitudinal axis of the segment, the longitudinal axis being orthogonal to the finished segment lamination sheet,
- each finished segment lamination sheet being cut from a sheet of raw material and curved about the longitudinal axis,
- the sheet of raw material comprising Grain Oriented Electrical Steel,
wherein each finished segment lamination sheet is cut and curved in such a way that the grains of the Grain Oriented Electrical Steel are radially oriented with respect to the longitudinal axis.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawing

- Figure 1: shows a schematic section of a wind turbine including an electrical generator with a segmented stator manufactured according to steps of the manufacturing method of the present invention.
- Figure 2: shows an axonometric view of a circumferential segment manufactured according to steps of the manufacturing method of the present invention.
- Figure 3: a block diagram representing the manufacturing method of the present invention.
- Figure 4: shows a schematic top view of intermediate semi-finished elements manufactured according to steps of the method of the present invention.
- Figure 5: shows another schematic top view of intermediate semi-finished elements manufactured according to steps of the manufacturing method of the present invention.
- Figure 6: shows a simplified axonometric view of a machine to be used in a step of the manufacturing method of the present invention.
- Figure 7: shows a further schematic top view of intermediate semi-finished elements manufactured according to steps of the manufacturing method of the present invention

### Detailed Description

The illustrations in the drawings are schematic. It is noted that in different figures, similar or identical elements are provided with the same reference signs.

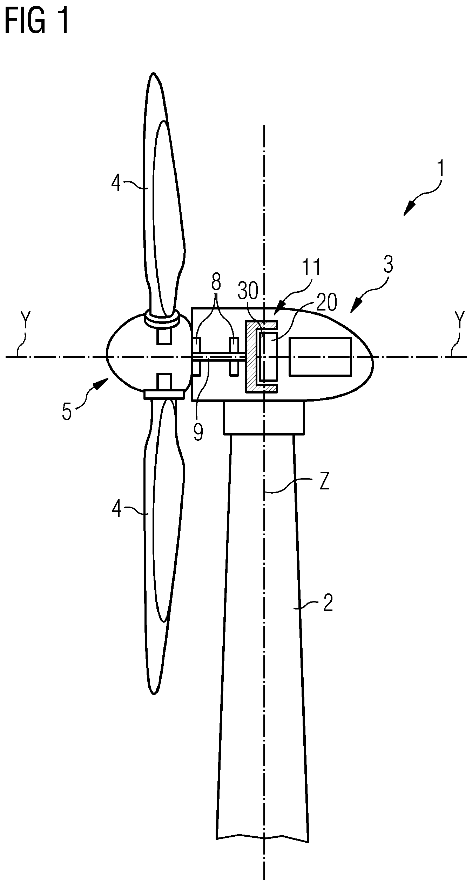

**Figure 1** shows a wind turbine 1 according to the invention. The wind turbine 1 comprises a tower 2, which is mounted on a non-depicted foundation. A nacelle 3 is arranged on top of the tower 2. The wind turbine 1 further comprises a wind rotor 5 having at least one blade 4 (in the embodiment of Figure 1, the wind rotor comprises three blades 4, of which only two blades 4 are visible). The wind rotor 5 is rotatable around a rotational axis Y. The blades 4 extend substantially radially with respect to the rotational axis Y. In general, when not differently specified, the terms axial, radial and circumferential in the following are made with reference to the rotational axis Y. The wind turbine 1 comprises an electric generator 11, including a stator 20 and a rotor 30. The rotor 30 is rotatable with respect to the stator 20 about the rotational axis Y. The wind rotor 5 is rotationally coupled with the electric generator 11 either directly (direct drive electric generator) or by means of a rotatable main shaft 9 and/or through a gear box (not shown in Figure 1). A schematically depicted bearing assembly 8 is provided in order to hold in place the main shaft 9 and the rotor 5. The rotatable main shaft 9 extends along the rotational axis Y.

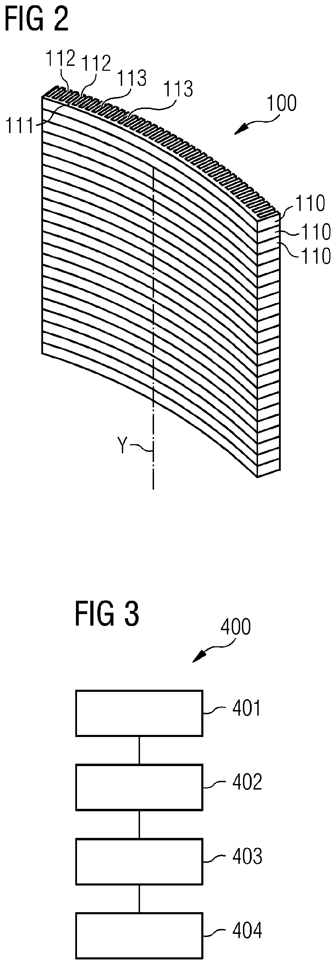

**Figure 2** shows a segment 100 for the stator 20 comprising a lamination structure including a central stator yoke 111 and a plurality of teeth 112 protruding according to a radial direction orthogonal to the longitudinal axis Y from the stator yoke 111. Each tooth 112 is circumferentially delimited by two respective slots 113, each slot 113 being circumferential delimited by a pair of circumferentially adjacent teeth 112. Each slot 113 houses a respective winding, which is not a specific element of the present invention and therefore is not represented in the attached figures). The segment 100 is obtained by stacking along the longitudinal axis Y a plurality of finished segment lamination sheet 110. Each finished segment lamination sheet 110 includes a respective axial portion of the plurality of teeth 112 and the plurality of slots of the segment 100.

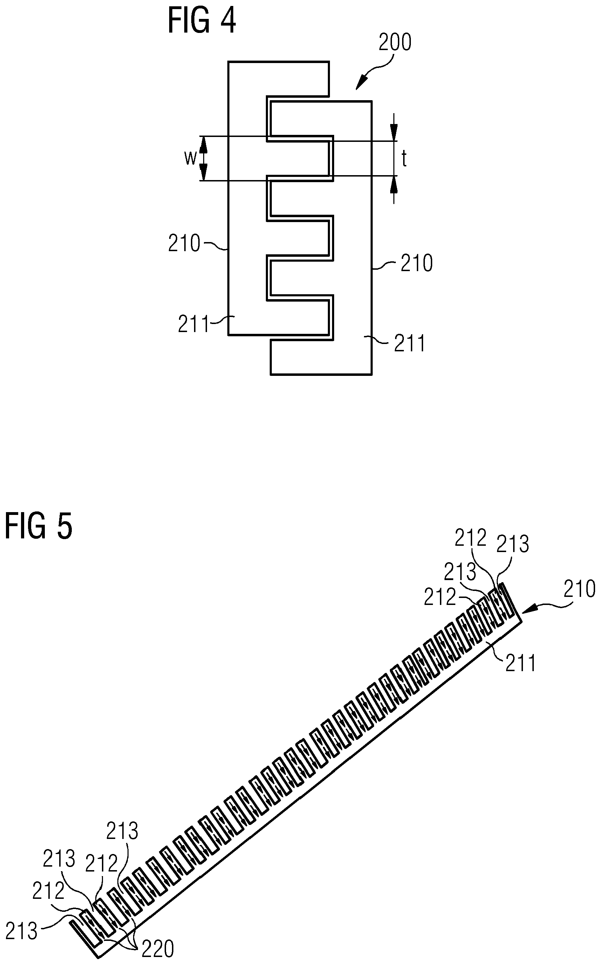

**Figure 3** shows a block diagram 400 representing a method of manufacturing the segment 100 according to the steps better detailed in the following and illustrated in figures 4 to 7. The same method may be used to manufacture a segment of a stator or a rotor of an electrical generator or any other electrical machine.

**Figure 4** shows how a plurality of semi-finished segment lamination sheet 210 may be obtained according to the present invention. A sheet of raw material 200 is provided according to a first step 401 of the manufacturing method 400. The sheet of raw material 200 comprises Grain Oriented Electrical Steel. According to other embodiment of the present invention, the sheet of raw material 200 may be made of another type of steel, for example a steel without grain orientation. In a second step 402, the method 400 comprises cutting a plurality of semi-finished segment lamination sheet 210. One semi-finished segment lamination sheet 210 is shown in **Figure 5****.** Each semi-finished segment lamination sheet 210 comprises a yoke 211 extending along a rectilinear direction, a plurality of semi-finished teeth 212 extending perpendicularly from the yoke 211 and a plurality of semi-finished slots 213 interposed between the plurality of teeth 212. In the semi-finished segment lamination sheet 210 the orientations of the grains are radial (as indicated by arrows 220). The second step of cutting 402 is performed by punching. According to other embodiments of the present invention, the second step of cutting 402 is performed by any other convenient method, for example any of laser cutting, plasma cutting, punches, ultrasonic cutting and water jet cutting. According to embodiments of the present invention, each semi-finished segment lamination sheet 210 is so dimensioned that the thickness t of the semi-finished teeth 212 in a direction parallel to the yoke 211 is smaller than the width w of the semi-finished slots 213 in the same direction parallel to the yoke 211. This permits nesting in the sheet of raw material 200 the semi-finished teeth 212 of one semi-finished segment lamination sheet 210 in the semi-finished slots 213 of another semi-finished segment lamination sheet 210. The latter is flipped after the cutting step.

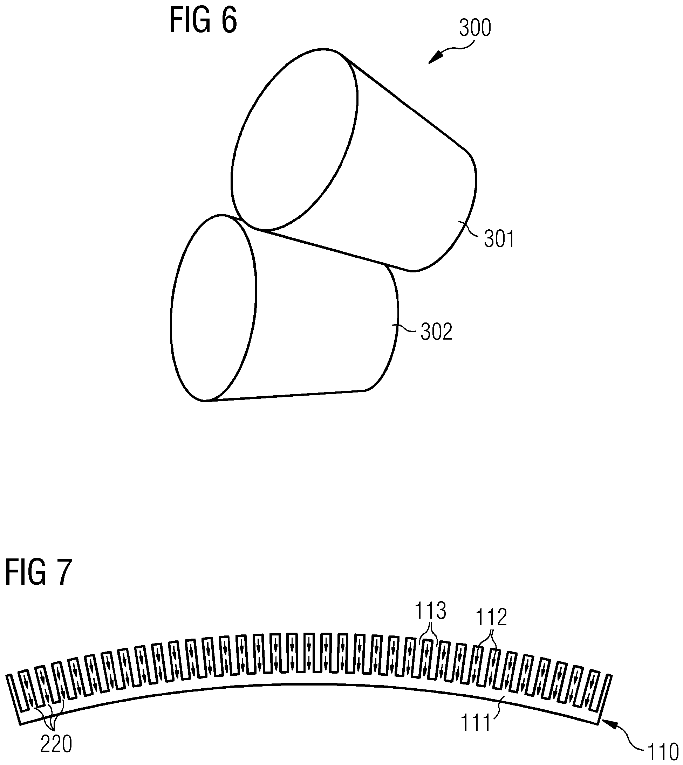

In a third step 403, the method 400 comprises curving each semi-finished segment lamination sheet 210 about the longitudinal axis Y, which coincident to a direction orthogonal to the semi-finished segment lamination sheet 210, for obtaining a plurality of finished segment lamination sheet 110. The step of curving may be performed in the conical roller machine 300 of **Figure 6**, having two opposed conic roller 301, 302 between which each semi-finished segment lamination sheet 210 is rolled for obtaining a respective finished segment lamination sheet 110.

One finished segment lamination sheet 110 is shown in **Figure 7****.** In the finished segment lamination sheet 110 grains remains radially oriented (as indicated by arrows 220).

In a fourth final step 404, the method 400 comprises stacking the plurality of finished segment lamination sheet 110 along the longitudinal axis Y for obtaining the segment 100 of figure 2. The finished segment lamination sheet 110 are then fixed to one another by any convenient attaching means.

According to other embodiments of the present invention, the sequence of the third step 403 and the fourth 404 may be inverted, i.e. first a stack of semi-finished segment lamination sheets 210 are created to form a pre-finished straight assembled segment and then laminating such pre-finished straight assembled segment to achieve the curved final segment 100.

## Claims

1. Method (400) of manufacturing a segment (100) for a stator (20) or a rotor (30) an electrical machine (11), the method including the following steps:
- providing a sheet of raw material (200),
- cutting a plurality of semi-finished segment lamination sheet (210) comprising a yoke (211) extending along a rectilinear direction, a plurality of semi-finished teeth (212) extending perpendicularly from the yoke (211) and a plurality of semi-finished slots (213) interposed between the plurality of teeth (212).

2. Method (400) as claimed in claim 1, further including the steps of:
- curving each semi-finished segment lamination sheet (210) about a longitudinal axis (Y) orthogonal to the semi-finished segment lamination sheet (210) for obtaining a plurality of finished segment lamination sheet (110),
- stacking the plurality of finished segment lamination sheet (110) along the longitudinal axis (Y) for obtaining the segment (100).

3. Method (400) as claimed in claim 1, further including the steps of:
- stacking the plurality of semi-finished segment lamination sheet (210) along a longitudinal axis (Y) orthogonal to the semi-finished segment lamination sheet (210) for obtaining a semi-finished assembly,
- curving the semi-finished assembly of the previous step about the longitudinal axis (Y) for obtaining the segment (100).

4. Method (400) as claimed in any of the previous claims, wherein each semi-finished segment lamination sheet (210) is so dimensioned that the thickness (t) of the semi-finished teeth (212) in a direction parallel to the yoke (211) is smaller than the width (w) of the semi-finished slots (213) in a direction parallel to the yoke (211), so that in the sheet of raw material (200) the semi-finished teeth (212) of one semi-finished segment lamination sheet (210) can be nested in the semi-finished slots (213) of another semi-finished segment lamination sheet (210).

5. Method (400) as claimed in any of the previous claims 1 to 4, wherein the step of cutting is performed by punching.

6. Method (400) as claimed in any of the previous claims 1 to 4, wherein the step of cutting is performed by any of laser cutting, plasma cutting, punches, ultrasonic cutting and water jet cutting.

7. Method (400) as claimed in any of the previous claims, wherein the step of curving is performed in a conical roller machine (300).

8. Method (400) as claimed in any of the previous claims, wherein the sheet of raw material (200) comprises Grain Oriented Electrical Steel.

9. Segment (100) for a stator (20) or a rotor (30) an electrical machine (11) comprising:
- a plurality of finished segment lamination sheet (110) stacked along a longitudinal axis (Y) of the segment (100), the longitudinal axis (Y) being orthogonal to the finished segment lamination sheet (110),
- each finished segment lamination sheet (110) being cut from a sheet of raw material (200) and curved about the longitudinal axis (Y),
- the sheet of raw material (200) comprising Grain Oriented Electrical Steel,
wherein each finished segment lamination sheet (110) is cut and curved in such a way that the grains of the Grain Oriented Electrical Steel are radially oriented with respect to the longitudinal axis (Y).
